# EUROPEAN PATENT SPECIFICATION

(11) **EP 2 550 479 B1**
(45) Date of publication and mention of the grant of the patent: **23.09.2015**
(21) Application number: 11720623.5
(22) Date of filing: 20.03.2011
(51) Int. Cl.: F21S 8/00, F21V 14/04, F21Y 101/02

(54) **LENS SYSTEM FOR AN LED LUMINAIRE**
LINSENSYSTEM FÜR EINEN LED-BELEUCHTUNGSKÖRPER
SYSTÈME DE LENTILLES POUR LUMINAIRE DEL

(30) Priority: 22.03.2010 US 316335 P
(43) Date of publication of application: 30.01.2013
(73) Proprietor: Robe Lighting, Inc, Sunrise, FL 33325 (US)
(72) Inventor: JURIK, Pavel, Austin, Texas 78720 (US); VALCHAR, Josef, Austin, Texas 78720 (US)
(74) Representative: Käck, Stefan
(86) International application number: PCT/US2011/029124
(87) International publication number: WO 2011/119453

(56) References cited:
- GB-A- 2 231 138
- US-A1- 2006 268 097
- US-B1- 6 832 845

## Description

### TECHNICAL FIELD OF THE INVENTION

The present invention generally relates to an automated luminaire, specifically to an optical system for a luminaire utilizing an LED light source.

### BACKGROUND OF THE INVENTION

Luminaires with automated and remotely controllable functionality are well known in the entertainment and architectural lighting markets. Such products are commonly used in theatres, television studios, concerts, theme parks, night clubs and other venues. A typical product will typically provide control over the pan and tilt functions of the luminaire allowing the operator to control the direction the luminaire is pointing and thus the position of the light beam on the stage or in the studio. This position control is often done via control of the luminaire's position in two orthogonal rotatiorial axes usually referred to as pan and tilt. Many products provide control over other parameters such as the intensity, color, focus, beam size, beam shape and beam pattern. Additionally it is becoming common to utilize high power LEDs as the light source in such luminaires and, for color control, it is common to use an array of LEDs of different colors. For example a common configuration is to use a mix of Red, Green and Blue LEDs. This configuration allows the user to create the color they desire by mixing appropriate levels of the three colors. For example illuminating the Red and Green LEDs while leaving the Blue extinguished will result in an output that appears Yellow. Similarly Red and Blue will result in Magenta and Blue and Green will result in Cyan. By judicious control of the LED controls the user may achieve any color they desire within the color gamut set by the LED colors in the array. More than three colors may also be used and it is well known to add an Amber or White LED to the Red, Green and Blue to enhance the color mixing and improve the gamut of colors available. The products manufactured by Robe Show Lighting such as the REDWash 3.192 are typical of the art.

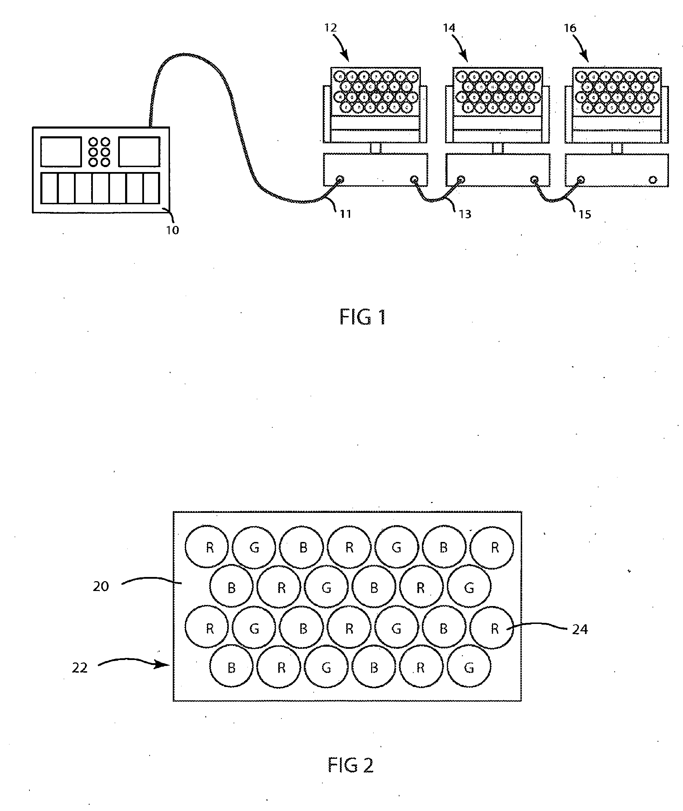

**Figure 1** illustrates a typical multiparameter automated LED luminaire system. These systems commonly include a plurality of multiparameter automated luminaires **12, 14**, **16** which typically each contain on-board an array of LEDs, and electric motors coupled to mechanical drives systems and control electronics (not shown). In addition to being connected to mains power either directly or through a power distribution system (not shown), each luminaire is connected is series or in parallel to data link **11, 13 ,15** to one or more control desks **10.** The luminaire system is typically controlled by an operator through the control desk **10.** Consequently to effect this control both the control desk **10** and the individual luminaires typically include electronic circuitry as part of the electromechanical control system for controlling the automated lighting parameters.

**Figure 2** illustrates the output panel of a prior art LED automated luminaire **22.** A panel **20** contains an array of LEDs **24** which emit light. In the case illustrated the LEDs **24** are in three colors, red (R), green (G) and blue (B). Each of the LED emitters **24** may emit light at a fixed beam angle. In further prior art devices each LED emitter **24** is fitted with an output optical system which allows changes in beam angle of the output. These systems are both limited in their zoom range and suffer from chromatic aberration in the optical systems such that the final size of the beams of each color are different. For example, the beam from the red LEDs may be larger than that from the blue resulting in a red halo around the edge of the combined beam.

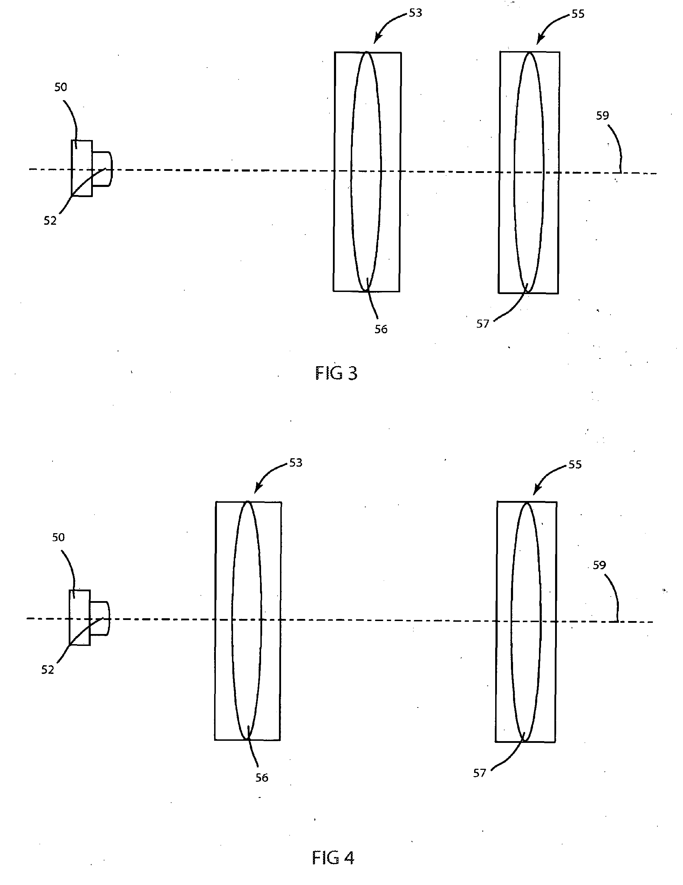

**Figures 3** and **4** illustrate an optical system used in the prior art to provide a variable beam angle or zoom to an automated LED luminaire. Each LED **50** which may be fitted with a primary optic **52** has an associated pair of lenses **53** and **55.** Lenses **53** and **55** may be separate lenses or each part of an array of lenses covering the entire LED array. Lenses **53** and **55** may each comprise a single optical element **56** and **57** respectively. In operation at least one of lens **53** or lens **55** is stationary with respect to LED **50** while the other may move along optical axis **59.** In the example illustrated in **Figures 3** and **Figure 4** lens **55** is fixed relative to LED **50** while lens **53** is able to move along optical axis 59. **Figure 3** shows lens **53** in a first position and **Figure 4** shows lens **53** in a second position closer to LED **50.** This varying relative position between LED **50,** lens **53** and lens **55** provides a beam angle or zoom to the light beam from LED **50.**

Furthermore, GB 2 231 138 A discloses to a computer controlled light which mixes white light beams from sources to produce a single coloured light beam by the use of three special mirrors which redirect a particular portion of the spectrum of the white light source into a coloured composite beam. A front lens system for said light is comprised of four lens elements. Two of the lens elements are fixed in position, while the other two lens elements are movable. With the correct positioning of the second and third lens elements, the front lens system can produce a light beam whose angle of divergence can be varied from 4 degree to 64 degree.

US 2006/0268097 A1 describes an optical system for an imaging device using diffusive light sources. The system comprises an array of diffusive light sources and a first lens disposed to receive light emitted from two or more of said light sources of said array. Further, an aperture plate is disposed to receive light from said first lens. The aperture plate comprises a plurality of apertures each for passing light emitted by a respective one of the diffusive light sources of said array and for blocking light from other ones of said diffusive light sources. The system also comprises a second lens disposed to receive said light after passing through the plurality of apertures and to focus the light onto an image plane.

US 6,832,845 B1 relates to light projectors that produce light beams for specialty light effects. The light projector comprises a focal lens sleeve. A first objective focal lens and a second objective focal lens are held in a position within the sleeve by two snap-ring spacers. The objective lenses may be coated to minimize surface reflections, and can be achromatic to correct for spherical and chromatic aberrations. Moving the sleeve toward or way from a reducing body of the projector moves the objective lenses relative to a condensing lens in the projector to focus the light projector.

There is a need for an optical zoom system for an LED automated luminaire with improved zoom range and reduced chromatic abberation.

### SUMMARY OF THE INVENTION

The invention is defined in claim 1. Particular embodiments are set out in the dependent claims.

### BRIEF DESCRIPTION OF THE DRAWINGS

For a more complete understanding of the present invention and the advantages thereof, reference is now made to the following description taken in conjunction with the accompanying drawings in which like reference numerals indicate like features and wherein:
**FIGURE 1** illustrates a typical automated LED lighting system;
**FIGURE 2** illustrates the front panel of an LED luminaire system;
**FIGURE 3** illustrates optical components of a prior art LED luminaire;
**FIGURE 4** illustrates optical components of a prior art LED luminaire;
**FIGURE 5** illustrates optical components of an embodiment of the disclosed LED luminaire;
**FIGURE 6** illustrates optical components of an embodiment of the disclosed LED luminaire;
**FIGURE 7** illustrates the front panel of an embodiment of the disclosed LED luminaire;
**FIGURE 8** illustrates an embodiment of the optical components illustrated in **Figure 5 and Figure 6****;** and
**FIGURE 9** illustrates an alternative embodiment of the optical component illustrated in **Figure 5** and **Figure 6****.**

### DETAILED DESCRIPTION OF THE INVENTION

Preferred embodiments of the present invention are illustrated in the FIGUREs, like numerals being used to refer to like and corresponding parts of the various drawings.

The present invention generally relates to an automated luminaire, specifically to an optical system for a luminaire utilizing an LED light source.

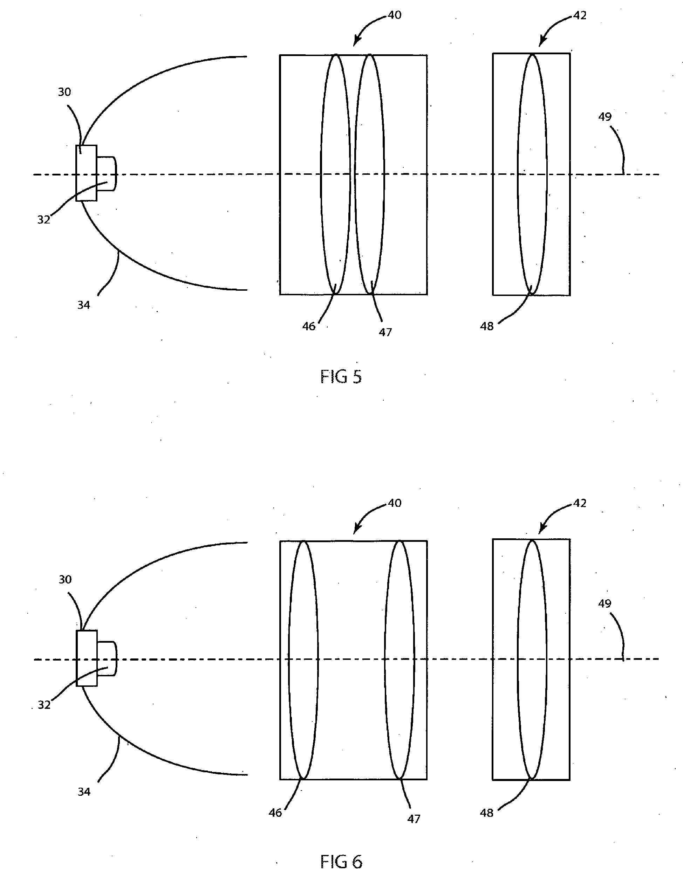

**Figures 5** and **6** illustrate an optical system used in an embodiment of the invention to provide an improved variable beam angle or zoom to an automated LED luminaire. Each LED **30** which is fitted with a primary optic **32** is mounted within an elliptical reflector **34.** Reflector **34** serves to collect light from LED **30** and directs it towards lens system **40** and lens system **42.** Lens system **40** contains two or more optical elements **46** and **47.** After passing through lens system **40** the light will pass through fixed output lens **42.** Output lens **42** may contain one or more optical elements **48.** Optical elements **46, 47** and **48** are illustrated herein as bi-convex lenses however the invention is not so limited and elements **46, 47** and **48** may be any optical element as well known in the art.

In operation output lens system **42** is fixed in position along optical axis **49** relative to LED **30** while either one or a plurality of optical elements **46** and **47** contained in lens system **40** may be free to move along optical axis **49** relative to LED **30** and output lens system **42.** Optical elements **46** and **47** are chosen such that varying their position along optical axis **49** in conjunction with fixed output lens provides a beam angle or zoom to the light beam from LED **30.** **Figure 5** shows lens elements **46** and **47** in first positions and **Figure 6** shows lens elements **46** and **47** in second positions relative to LED **30.** The positions of lens elements **46** and **47** in **Figure 6** relative to each other and to fixed LED **30** and fixed output lens **42** provides a beam angle or zoom that differs from that provided by the positions of lens elements **46** and **47** in **Figure 5****.**

The optical properties of lens elements **46, 47** and **48** may be chosen such that the combined optical path is achromatic and provides the same degree of beam angle change to long wavelength, red, light as it does to short wavelength, blue, light and thus avoids chromatic aberration. This ensures that the beam from the red LEDs, green LEDs and blue LEDs are all the same size resulting in a uniformly colored combined beam.

Although the figures illustrate three colors of LEDs, red, green, and blue, the invention is not so limited and any number of colors of LEDs may be used.

For example a system may use five different color LEDs such as red, green blue, amber and white or any combination thereof.

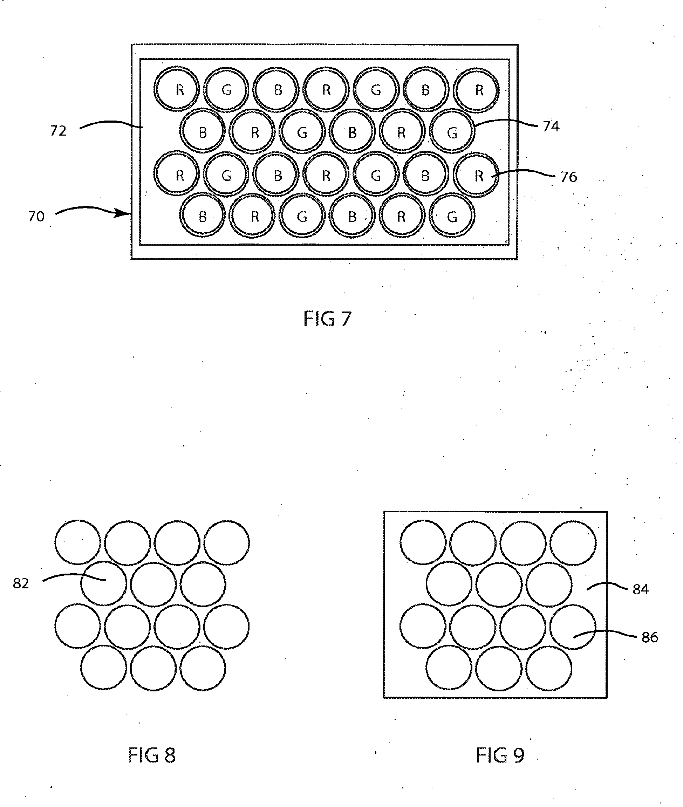

**Figure 7** illustrates the output panel **72** of an embodiment **70** of the invention. LEDs **74** each have an individual associated optical system **76** comprising lenses as described above in Figures 5 and 6. These lens systems may comprise individual lens elements **82** as shown in **Figure 8** or may be an array of lenses **86** molded in a single sheet **84** as illustrated in **Figure 9****.** Although the arrays of LEDs **74** and lenses **86** are illustrated as rectangular the invention is not so limited and the arrays may be any shape including but not limited to round, square, rectangular, and hexagonal. Although the figures shown here are of an embodiment with wash optics the invention is not so limited and the light output from the optical system may be imaging where a focused or defocused image is projected, or non-imaging where a diffuse soft edged light beam is produced. The invention may be used as a beam angle control system with optical systems commonly known as spot, wash, beam or other optical systems known in the art.

While the disclosure has been described with respect to a limited number of embodiments, those skilled in the art, having benefit of this disclosure, will appreciate that other embodiments may be devised which do not depart from the scope of the disclosure as disclosed herein. The disclosure has been described in detail, it should be understood that various changes, substitutions and alterations can be made hereto without departing from the scope of the disclosure.

## Claims

1. An automated luminaire comprising:
a plurality of LED light sources (74), wherein each LED (30) has an individual associated optical system (76) comprising a primary optics lens element (32), a second lens element (46), a third lens element (47), and a fourth lens element (48), wherein each LED (30) is mounted within a reflector (34), thereby generating a light beam, with a directional LED axis (49), which is directed toward and captured by the second lens element (46) which is movably mounted to move in a path generally parallel with the LED axis (49) and the third lens element (47) which is also movably mounted to move in a path generally parallel with the LED axis (49) and the fourth lens element (48) which is fixed relative to the LED (30), and wherein the second, third and fourth lens elements (46, 47, 48) form a zooming function whereby the angle of the light beam can be varied by moving the second and/or third lens elements (46, 47).

2. The automated luminaire of claim 1, wherein the second, third and fourth lens elements (46, 47, 48) form an achromatic lens which generally varies the beam angle of the light equivalently regardless of its wavelength within the visible range.

3. The automated luminaire of claim 1 or 2, wherein one of the lens elements (46, 47, 48) is formed of more than one lens.

4. The automatic luminaire of claim 1, 2 or 3, wherein one of the lens elements (46, 47, 48) is biconvex.

5. The automatic luminaire of claim 4, wherein two of the lens elements (46, 47, 48) are biconvex.

6. The automatic luminaire of claim 5, wherein three of the lens elements (46, 47, 48) are biconvex.

## Patentansprüche

1. Automatisierte Leuchte, die umfasst:
eine Vielzahl von LED-Lichtquellen (74), wobei jede LED (30) ein individuelles zugehöriges optisches System (76) mit einem primären optischen Linsenelement (32), einem zweiten Linsenelement (46), einem dritten Linsenelement (47) und einem vierten Linsenelement (48) aufweist, wobei jede LED (30) innerhalb eines Reflektors (34) montiert ist, wodurch ein Lichtstrahl mit einer gerichteten LED-Achse (49) erzeugt wird, der in Richtung des zweiten Linsenelements (46), das beweglich montiert ist, um sich in einem Weg im Allgemeinen parallel zur LED-Achse (49) zu bewegen, und des dritten Linsenelements (47), das auch beweglich montiert ist, um sich in einem Weg im Allgemeinen parallel zur LED-Achse (49) zu bewegen, und des vierten Linsenelements (48), das relativ zur LED (30) fest ist, gerichtet ist und durch diese erfasst wird und wobei das zweite, das dritte und das vierte Linsenelement (46, 47, 48) eine Zoomfunktion bilden, wodurch der Winkel des Lichtstrahls durch Bewegen des zweiten und/oder des dritten Linsenelements (46, 47) verändert werden kann.

2. Automatisierte Leuchte nach Anspruch 1, wobei das zweite, das dritte und das vierte Linsenelement (46, 47, 48) eine achromatische Linse bilden, die im Allgemeinen den Strahlwinkel des Lichts ungeachtet seiner Wellenlänge innerhalb des sichtbaren Bereichs gleichmäßig verändert.

3. Automatisierte Leuchte nach Anspruch 1 oder 2, wobei eines der Linsenelemente (46, 47, 48) aus mehr als einer Linse gebildet ist.

4. Automatisierte Leuchte nach Anspruch 1, 2 oder 3, wobei eines der Linsenelemente (46, 47, 48) bikonvex ist.

5. Automatisierte Leuchte nach Anspruch 4, wobei zwei der Linsenelemente (46, 47, 48) bikonvex sind.

6. Automatisierte Leuchte nach Anspruch 5, wobei drei der Linsenelemente (46, 47, 48) bikonvex sind.

## Revendications

1. Luminaire automatisé comprenant :
une pluralité de sources lumineuses à LED (74), chaque LED (30) ayant un système optique (76) individuel associé qui comprend un élément lentille d'optique primaire (32), un deuxième élément lentille (46), un troisième élément lentille (47) et un quatrième élément lentille (48), chaque LED (30) étant montée dans un réflecteur (34), et générant ainsi un faisceau lumineux, avec un axe de LED (49) directionnel qui est dirigé vers et capturé par le deuxième élément lentille (46) qui est monté mobile pour se déplacer sur un chemin de manière généralement parallèle à l'axe de LED (49), le troisième élément lentille (47) qui est également monté mobile pour se déplacer sur un chemin de manière généralement parallèle à l'axe de LED (49) et le quatrième élément lentille (48) qui est fixe par rapport à la LED (30), les deuxième, troisième et quatrième éléments lentille (46, 47, 48) formant une fonction de zoom, moyennant quoi on peut faire varier l'angle du faisceau lumineux en déplaçant les deuxième et/ou troisième éléments lentille (46, 47).

2. Luminaire automatisé selon la revendication 1, dans lequel les deuxième, troisième et quatrième éléments lentille (46, 47, 48) forment une lentille achromatique qui, de manière générale, fait varier l'angle de faisceau de la lumière de manière équivalente quelle que soit sa longueur d'onde dans le domaine visible.

3. Luminaire automatisé selon l'une des revendications 1 ou 2, dans lequel un des éléments lentille (46, 47, 48) est formé de plus d'une lentille.

4. Luminaire automatisé selon l'une des revendications 1, 2 ou 3, dans lequel un des éléments lentille (46, 47, 48) est biconvexe.

5. Luminaire automatisé selon la revendication 4, dans lequel deux des éléments lentille (46, 47, 48) sont biconvexes.

6. Luminaire automatisé selon la revendication 5, dans lequel trois des éléments lentille (46, 47, 48) sont biconvexes.
